# EUROPÄISCHE PATENTSCHRIFT

(11) **EP 1 876 142 B1**
(45) Veröffentlichungstag und Bekanntmachung des Hinweises auf die Patenterteilung: **17.09.2008**
(21) Anmeldenummer: 06012758.6
(22) Anmeldetag: 21.06.2006
(51) Int. Cl.: C01B 17/94, C01B 17/80, B01D 3/14, B01D 3/32, B01D 3/40

(54) **Verfahren und Anlage zur Konzentrierung von Abfall-Schwefelsäuren aus Nitrierprozessen**
Process and installation for concentrating waste sulphuric acids from nitration processes
Procédé et installation de concentration d'acide sulfurique usé des procédés de nitration

(43) Veröffentlichungstag der Anmeldung: 09.01.2008
(73) Patentinhaber: QVF Engineering GmbH, 55122 Mainz (DE)
(72) Erfinder: Walter, Ulrich, 65510 Idstein (DE); Dichtl, Gottfried, 55268 Nieder-Olm (DE)
(74) Vertreter: Andrae, Steffen

(56) Entgegenhaltungen:
- US-A- 5 275 701
- US-A- 6 156 288

## Beschreibung

Die vorliegende Erfindung betrifft ein Verfahren und eine Anlage zur Reinigung und Konzentrierung verbrauchter und verwässerter Schwefelsäure aus Nitrierprozessen, bei denen Salpetersäure in Gegenwart von Schwefelsäure als Nitriermedium eingesetzt wird. Eine solche verwässerte Schwefelsäure wird im folgenden in der Regel als "Nitrierabsäure" bezeichnet.

Nitrierverfahren spielen in der chemischen Industrie zur Herstellung von Nitroverbindungen eine zentrale Rolle und werden im großindustriellen Maßstab durchgeführt. Die hergestellten Nitroverbindungen dienen aufgrund der zahlreichen Reaktionsmöglichkeiten einer Nitrogruppe und der daraus herstellbaren Folgeprodukte in den meisten Fällen als wertvolle Zwischenprodukte.

Besonders wichtig ist die Nitrierung von aromatischen Verbindungen, z.B. von Toluol, unter Herstellung von Nitroaromaten, insbesondere von Dinitrotoluol (2,4-Dinitrotoluol; DNT), da aromatische Nitrogruppen durch Reduktion einfach in Aminogruppen überführt werden können, die ihrerseits zahlreichen weiteren Umsetzungen unterzogen werden können. Eine besonders wichtige Weiterverarbeitung z.B. von DNT ist die zu Toluoldiisocyanat (TDI) nach einer einleitenden Reduktion von DNT zu Toluoldiaminen und deren nachfolgende Umsetzung mit Phosgen, oder auch durch direkte Umsetzung des DNT mit CO. TDI ist eines der wichtigsten aromatischen Diisocyanate zur Herstellung von Polyurethanen.

Die Einführung einer oder mehrerer Nitrogruppen in eine aromatische Verbindung wie z.B. Toluol erfolgt als elektrophile Substitution mit Hilfe von Salpetersäure im Gemisch mit Schwefelsäure, z.B. einstufig mit Nitriersäure (dieser Begriff bezeichnet unterschiedlich zusammengesetzte Gemische von konzentrierter Schwefel- und Salpetersäure) oder, im Falle einer Dinitrierung wie bei der Herstellung von DNT, ggf. auch zweistufig mit Säuren unterschiedlicher Stärken, wobei bei einem typischen zweistufigen Verfahren in der ersten Stufe, unter Verwendung einer weniger konzentrierten ggf. aufgearbeiteten Absäure aus der zweiten Stufe, Toluol zu Mononitrotoluol (MNT) nitriert wird und in dieses MNT in der zweiten Stufe unter Verwendung einer hochkonzentrierten Salpetersäure unter Bildung von DNT eine weitere Nitrogruppe eingeführt wird (vgl. z.B. EP 155 586 A1).

Während der Salpetersäureanteil der Nitriersäure bei der Einführung der Nitrogruppen als Substituenten am aromatischen Ring zu einem möglichst hohen Anteil verbraucht wird, wird die gleichzeitig vorhandene konzentrierte Schwefelsäure nur durch das entstehende Reaktionswasser verdünnt und verunreinigt. Sie bildet die eingangs genannte "Nitrierabsäure", die typischerweise hauptsächlich aus einer mehr als 70 Ma.-%igen (Masse-%) Schwefelsäure und Wasser, sowie geringeren Anteilen an Salpetersäure, Nitroorganika, beispielsweise Mononitrotoluol (MNT) und Dinitrotoluol (DNT), sowie nitrosen Bestandteilen in Form von z.B. Nitrosylschwefelsäure (in der Folge abgekürzt NSS) besteht.

Es ist ein zwingendes Erfordernis einer modernen ökonomischen Verfahrensführung, diese Nitrierabsäure aufzuarbeiten und in eine im Verfahren wiederverwendbare konzentriertere Schwefelsäure zu überführen. Ein Einsatz von frischer Schwefelsäure für den Nitrierprozess ist aus ökonomischen und umweltrelevanten Gründen seit langem nicht mehr vertretbar.

Daher wird heute regelmäßig eine Rückkonzentrierung des Stroms der Nitrierabsäure auf Schwefelsäurekonzentrationen zwischen 89 Ma.-% bis 94 Ma.-% durchgeführt, wobei es das Ziel sein muss, eine solche Rückkonzentrierung mit einem möglichst geringen Energieeinsatz und der Bildung möglichst geringer Mengen an chemikalienbelasteten Abfallströmen, die aus dem Verfahren ausgeschleust werden müssen, zu erreichen.

Eine Hochkonzentrierung von Schwefelsäure bis maximal 96 Ma.-% Schwefelsäuregehalt, die auf Grund der thermodynamischen Verfahrensvoraussetzungen in den letzten Stufen sinnvoll unter Unterdruckbedingungen erfolgt, ist mit der Entwicklung von dafür geeigneten hochkorrosionsbeständigen Materalien wie Tantal, Email und Glas für die Verdampfung bei hohen Temperaturen seit Jahrzehnten Stand der Technik. Dabei ist allerdings als Einschränkung zu beachten, dass das bevorzugte Verdampfermaterial Tantal nur bei einer maximalen Siedetemperatur der zu konzentrierenden Nitrierabsäure von weniger als 208°C eingesetzt werden darf.

Ein frühes Verfahren, gebrauchte verdünnte Schwefelsäure relativ rein auf ca. 96 Ma.-% zu konzentrieren, war das sogenannte Pauling-Verfahren [Bodenbrenner, von Plessen, Vollmüller, Dechema-Monogr. 86 (1980), 197]. Dieses Verfahren war jedoch energieintensiv und wies als weiteren Nachteil eine hohe Bildung von SO₂- und NOx-Verbindungen aufgrund einer starken oxidativen Zersetzung der in der Nitrierabsäure enthaltenen Organika bei den erforderlichen hohen Temperaturen auf.

Die besondere Problematik bei der Aufkonzentrierung von Nitrierabsäuren aus Nitrierprozessen liegt in den aus der Nitrierung stammenden Fremdbestandteilen in der Säure, insbesondere in Form von Stickstoff-Sauerstoff-Gruppen enthaltenden Verbindungen wie Salpetersäure, verschiedenen Organika, hauptsächlich MNT und DNT, sowie den gelösten nitrosen Bestandteilen in Form von Nitrosylschwefelsäure (NSS), deren Gehalt in der Regel als Gehalt an salpetriger Säure (HNO₂) angegeben wird.

Da die genannten Stoffe ihrem Charakter nach entweder potentielle Einsatzprodukte sind oder unvollständig abgetrennte Produkte bzw. Zwischenprodukte, wird natürlich angestrebt, sie ebenso wie die Schwefelsäure dem Nitrierprozess weitestgehend wieder zuführen zu können und die Verluste dieser Ausgangs-, Zwischen- und Endprodukte so gering wie möglich zu halten. Die Verfahren des Standes der Technik waren diesbezüglich jedoch noch suboptimal, insbesondere wenn man berücksichtigt, dass sich derartige potentiell nützlichen Produkte auch noch in anderen Produktströmen eines Verfahrens zur Nitrierung von aromatischen Verbindungen finden lassen, z.B. im Waschwasser des in kristalliner Form isolierten Verfahrens-Endprodukts der Toluolnitrierung, des DNT, die bisher vielfach als Abfallströme aus dem Nitrierverfahren ausgeschleust bzw. separat aufgearbeitet wurden. Ein DNT-Waschwasser der genannten Art ist säurehaltig, weshalb es auch als Waschsäure bezeichnet wird, und kann z.B. eine typische Zusammensetzung von 10-20 Ma.-% HNO₃, 5-12 Ma.-% H₂SO₄ (18-35 Ma.-% Gesamtsäure) sowie gelöste Nitroorganika (DNT, MNT) enthalten. Für diese Waschsäure wird auch der Begriff "Mischsäure" verwendet.

Die Anwesenheit der genannten Stickstoff-Sauerstoff-Verbindungen, insbesondere der Nitroorganika, in der Nitrierabsäure führt dazu, dass die Rückgewinnung und Aufkonzentrierung des darin enthaltenen Schwefelsäureanteils mit besonderen technischen Schwierigkeiten verbunden ist. So können die Anteile der nitrierten Aromaten, die schwerflüchtige Feststoffe darstellen, die in wässrigen Medien eine geringe Löslichkeit aufweisen und aus diesen ausfallen können, sich an Anlagenteilen abscheiden, diese verstopfen und dadurch das Gesamtverfahren stören. Die Anteile an Salpetersäure und Nitrosoverbindungen dagegen sind relativ flüchtig und können in Abdampfströme übergehen, aus denen sie jedoch schwer zurück zu gewinnen sind und ein Umweltrisiko darstellen können.

Zu den einzelnen störenden Inhaltsstoffen einer Nitrierabsäure werden im Folgenden die Probleme aufgezeigt, die diese bei der Konzentrierung der Nitrierabsäure unter Gewinnung einer konzentrierten Schwefelsäure bereiten, wobei gleichzeitig bekannte Wege des Standes der Technik zur Lösung der mit diesen Inhaltsstoffen verbunden speziellen Probleme diskutiert werden:

### a. Salpetersäure:

In den einzelnen Verdampfungsstufen der Aufarbeitung von Nitrierabsäure zur Schwefelsäurekonzentrierung wird die im Feed enthaltene Salpetersäure letztlich aufgrund ihrer vergleichweise hohen Flüchtigkeit nahezu vollständig von der konzentrierten Schwefelsäure abgedampft, gelangt somit hauptsächlich in das Brüdenkondensat und damit, wenn man keine besonderen Maßnahmen trifft, zwangsläufig in das auszuschleusende Abwasser. Bei einigen Nitrierabsäuren aus der Nitrierung kann der Gehalt an HNO₃ im Feed je nach Nitrierverfahren durchaus zwischen 1 - 2 Ma.-% liegen, insbesondere dann, wenn die Nitrierung statt mit azeotroper Salpetersäure mit hochkonzentrierter Salpetersäure von etwa 98 Ma.-% - 99 Ma.-% durchgeführt wird.

Derartig hohe Anteile an HNO₃ in der Nitrierabsäure würden neben dem Verlust dieser Salpetersäure auch zu einer zu hohen Nitratbelastung im Abwasser führen. Letzteres ist heute aus Umweltschutzgründen nicht mehr zu akzeptieren.

Deshalb wurde die Nitrierabsäure in der Vergangenheit in der Regel in einer Stufe der Vorkonzentrierung auf den oberen Teil einer mit Wasserdampf im Gegenstrom betriebenen Strippkolonne aufgegeben, um die Salpetersäure nahezu vollständig aus der Schwefelsäure zu eliminieren. Eine weitere erwünschte Wirkung dieser Vorkonzentrierung mittels einer Strippkolonne bestand darin, dass man gleichzeitig auch einen Teil der anderen Störprodukte in der Nitrierabsäure durch Strippen entfernen konnte, wie beispielsweise einen Teil der Belastung durch Nitroorganika. Die Energie für eine solche Vorkonzentrierstufe, die vorwiegend unter Normaldruck betrieben wurde, wurde je nach Verfahren entweder indirekt von einem eigenem Heizer geliefert, jedoch auch von einem in die Strippkolonne eingeleiteten Direktdampf.

Als Kopfprodukt der Vorkonzentrierstufe wurde nach dessen Totalkondensation zwangsläufig eine sehr wässrige, DNT/MNT- und HNO₃-haltige heterogene Lösung erhalten, aus der zunächst die nichtlöslichen, als Feststoffe ausfallenden Organikabestandteile durch Schwerkraft (Absitzenlassen, Zentrifugieren) abgeschieden werden mussten. Um die in der erhaltenen flüssigen Phase enthaltene Salpetersäure zurückzugewinnen, wurde eine zusätzliche unterazeotrope Rektifikationsstufe, die meist wie die Vorkonzentrierstufe bei Normaldruck arbeitete, in das Aufarbeitungsverfahren integriert, um im Sumpf einer solchen Rektifikation eine ca. 45 - 50 %ige Salpetersäure zu gewinnen. Diese kann bei vielen Nitrierverfahren ohne weitere Höherkonzentrierung ebenso wie die abgeschiedenen Organika (hauptsächlich DNT) durch Rückführung direkt in der Nitrierung genutzt werden.

Als Kopfprodukt der Salpetersäure-Rektifikation konnte ein relativ säurefreies Abwasser gewonnen werden, das geeignet war, wenigstens zum Teil als Waschwasser für die DNT-Wäsche verwendet zu werden.

Der in die Aufarbeitung der Nitrierabsäure integrierte Verfahrensschritt einer speziellen Salpetersäurerückgewinnung ist unter dem Fachbegriff *"*Nitric acid pre-concentration*"*, bekannt, abgekürzt mit den Buchstaben *"*NAPC*"*.

Ein wesentlicher Nachteil dieser NAPC-Stufe ist, dass durch die Rektifikation das aus der Strippkolonne auszuschleusende Wasser ein zweites Mal verdampft und kondensiert werden muss. Darüber hinaus besteht die Gefahr, dass sich bei Temperaturen des Brüdenkondensats unter 55°C das nicht ausfallende DNT als Feststoff in Anlagenteilen absetzt und dadurch zu erheblichen Schwierigkeiten führt.

Die NAPC-Stufe kommt in bekannten Verfahren auch dann zur Anwendung, wenn das bereits erwähnte säurehaltige Waschwasser aus der DNT-Wäsche, das ein Schwefelsäure/Salpetersäure-Gemisch mit zwischen 18 - 35 Ma.-%, meist zwischen 20 - 30 Ma.-% Gesamtsäure ist, aufgearbeitet werden muss. Da in einem solchen aufzuarbeitenden säurehaltigen Waschwasser ebenfalls nitrose Bestandteile und DNT im Feed vorhanden sind, ist diese Waschsäure mit dem Brüdenkondensat der Vorkonzentrierstufe vergleichbar und ähnlich problembehaftet.

### b. Nitrosylschwefelsäure HNOSO₄ (HNO₂)

Die Nitrosylschwefelsäure (NSS), die in verdünnten wässrigen Schwefelsäuren kaum existent ist, jedoch in hochkonzentrierter Schwefelsäure von mehr als 82 Ma.-% sehr stabil ist, wird beim Nitrierprozess gebildet und kann in der aufzukonzentrierenden Nitrierabsäure in Mengen bis über 5 Ma.-% enthalten sein. Sie verkörpert das Potential der in der Nitrierabsäure enthaltenen nitrosen Bestandteile, deren Gehalt als salpetrige Säure HNO₂ angegeben wird.

Der Grund ist, dass die analytische Erfassung der NSS in der Nitrierabsäure normalerweise in stark verdünnter Lösung entsprechend der nachfolgenden Gleichung als HNO₂ erfolgt:

HNOSO₄ + H₂O → H₂SO₄ + HNO₂

Bei der thermischen Konzentrierung einer ausreichend wasserhaltigen Nitrierabsäure wird die darin vorhandene NSS zum großen Teil nach folgender Reaktionsgleichung zersetzt:

2 HNOSO₄ + H₂O → 2H₂SO₄ + NO₂ + NO

Gelangt das entstandene Stickstoffdioxid durch Abtrieb in den Kondensatorbereich, beispielsweise der Vorkonzentrierstufe, so wird daraus sehr schnell ein beträchtlicher Teil an neuer stark verdünnter Salpetersäure gebildet, die man zusammen mit einem großen Wasseranteil im NAPC-Schritt aufarbeiten muss.

Das in der Nitrierabsäure enthaltene und gemäß der o.g. Gleichung neu gebildete NO-Gas ist nicht löslich und tritt aufgrund des Sauerstoffmangels in der Anlage unverändert durch die Kondensatoren. Dieses NO-haltige Gas wird, wie bei den heutigen technischen Verfahren ohnehin üblich, zur Reinigung und Rückgewinnung einer weiteren Aufarbeitung zugeführt, beispielsweise einer NOx-Absorptionsstufe zur Produktion von weiterer unterazeotroper Salpetersäure.

Trotz der Schwierigkeiten, die die Stickoxide im Kopfprodukt der Strippkolonne zur Vorkonzentrierung der Schwefelsäure bereiten, ist die Zersetzung der NSS (HNO₂) in dieser Konzentrierstufe erwünscht, da sich die NSS bei der weiteren Aufkonzentrierung, bei der sich die Schwefelsäuregehalte weiter erhöhen, über der o.g. Grenze von 82 Ma.-% Schwefelsäure nicht mehr zersetzt. Würde die NSS nicht in der Vorkonzentrierstufe zersetzt, würde sie mit der konzentrierten Schwefelsäure im Kreislauf geführt, und ihr Gehalt würde während des Verfahrens bei fortschreitender Nitrierung und Konzentrierung der Nitrierabsäure unnötig ansteigen.

Eine Vorkonzentrierstufe nach dem bisherigen Stand der Technik, wie sie hierin beschrieben wurde, erfüllt die Aufgabe der Zersetzung der NSS jedoch nicht optimal.

### c. Nitroorganika, hauptsächlich DNT

Die meisten Probleme bei der Konzentrierung der wässrigen Feedsäure (d.h. der Nitrierabsäure) bereiten die in dieser gelösten Nitroorganika, vornehmlich das DNT. Aufgrund der eingeschränkten Mischbarkeit der Nitroorganika in der wässrigen Feedsäure sind MNT und DNT zwar wasserdampfflüchtig und lassen sich trotz der hohen Reinstoffsiedepunkte an sich prinzipiell durch Wasserdampf aus der Säure herausstrippen. Beim DNT, der höchstsiedenden der Nitroorganika-Verbindungen, gelingt die Abtrennung mit Strippdampf in der üblichen Vorkonzentrierstufe des Standes der Technik jedoch nur unzureichend.

Die Tatsache, dass in der Nitrierabsäure auch nach ihrer Vorkonzentrierung noch erhebliche Mengen an DNT vorhanden waren, hatte bei den bekannten Verfahren zur Folge, dass in den folgenden Stufen der Aufkonzentrierung der Nitrierabsäure im Unterdruckbetrieb bei etwa 100 mbar abs und darunter aufgrund der thermodynamisch verbesserten Bedingungen für die Verflüchtigung des DNT weiteres DNT in das Brüdenkondensat dieser Unterdruckstufen gelangte. Da die Brüden der Unterdruckstufen aufgrund des Unterdrucks im System bei relativ niedrigen Temperaturen von < 45 °C kondensiert werden müssen, fällt das nicht gelöste DNT als Feststoff aus den Brüdenkondensaten aus und stört den kontinuierlichen Prozess der SchwefelsäureKonzentrierung erheblich.

Um die Probleme zu vermeiden, die durch die DNT-Ausfällung in den Kondensaten der Brüden der Konzentrierung von Nitrierabsäure bei Unterdruck verursacht werden, wurde gemäß EP-A 0 155 586 A1 vorgeschlagen, im Rahmen eines zweistufigen Verfahrens zur DNT-Herstellung, bei dem die verdünnte Absäure aus der einleitenden Verfahrensstufe der Mononitrierung direkt einer Unterdruckkonzentrierung zugeführt wird, an ausgewählten Stellen zusätzlich MNT in definierter Menge in die Kondensatoren einzuspritzen, um den Stockpunkt der DNT-Fraktion abzusenken und die DNT-Kristallisation zu verhindern. Dieses Abspritzen mit MNT ist aufwändig und bringt MNT an Stellen des Konzentrierprozesses in die Prozessströme ein, wo es durchaus störend wirken kann. Als besonders nachteilig ist anzusehen, dass bei einer solchen Vorgehensweise das gesamte Abwasser, das bei der Konzentrierung der Nitrierabsäure und aus dem ggf. aus verfahrenstechnischen Gründen eingesetzten zusätzlichen Fremddampf erzeugt wird, zusätzlich mit Organika kontaminiert wird.

Um diesem Mangel Rechnung zu tragen, wurde gemäß DE 196 36 191 A1 vorgeschlagen, bei der Aufarbeitung der Nitrierabsäure vor die Unterdruckkonzentrierung eine Stufe der Reinigung der Absäure durch Strippen mit möglichst viel Wasserdampf vorzuschalten, um zu erreichen, dass die Nitroorganika, insbesondere das schwerstrippbare DNT mit hohem Stockpunkt, in dieser Stufe nahezu gänzlich aus der ablaufenden Abschwefelsäure eliminiert werden (Restgehalt < 20 ppm), so dass bei den nachfolgenden Konzentrierstufen bei 100 mbar (a) und darunter in den wässrigen Kondensaten dieser Stufen keine Probleme aufgrund der beschriebenen DNT-Ausfällungen mehr auftreten können.

Ein großer Mangel dieser Lösung ist, dass es nicht gelingt, die hohen erforderlichen Wasserdampfmengen für den DNT-Abtrieb durch Eigenverdampfung aus der eingesetzten Nitrierabsäure zu erzeugen, auch wenn man hierzu den Stripper und seinen Verdampfer unter optimalen Unterdruckbedingungen betreibt, bei denen die Tau- bzw. Siedetemperatur des Wassers noch oberhalb derjenigen Temperatur liegt, bei dem DNT auszufallen beginnt. Somit erfordert das Strippen von DNT mit der gewünschten Effektivität den Einsatz einer erheblichen Menge an Zusatzstrippdampf, der den Dampfverbrauch des Gesamtverfahrens stark ansteigen lässt und darüber hinaus eine merkliche Erhöhung der Abwassermenge bedeutet.

Bei der obigen Diskussion der Produktströme einer Anlage zur Nitrierung von Aromaten, z.B. zur Nitrierung von Toluol zur Herstellung von DNT, und zur Aufarbeitung der gebildeten Nitrierabsäure wurde noch nicht berücksichtigt, dass in derartigen Anlagen zur Erreichung der gewünschten Dinitrierung auch eine hochkonzentrierte Salpetersäure (75 bis 99.9 %ig, üblicherweise 98 - 99 %ig) benötigt wird, und zwar entweder zur Herstellung einer konzentrierten "Nitriersäure" im obigen Sinne oder zur Einführung einer zweiten Nitrogruppe in das in einer ersten Stufe unter Verwendung einer etwa azeotropen Salpetersäure hergestellte Mononitrotoluol (MNT) bei einer zweistufigen Verfahrensweise. Diese hochkonzentrierte Salpetersäure wird in einer der eigentlichen Anlage zur Durchführung der Nitrierung zugeordneten gesonderten Anlage hergestellt, die nur der Durchführung des als NACSAC-Verfahren ("nitric acid concentration sulfuric acid concentration") bezeichneten Verfahrens zur Hochkonzentrierung einer verdünnteren, üblichwerweise azeotropen Salpetersäure und der Rückkonzentrierung des Extraktionsmittels Schwefelsäure dient.

In dieser dem eigentlichen Nitrierverfahren beigeordneten Anlage wird eine als Einsatzprodukt erhältliche, ggf. verunreinigte etwa azeotrope Salpetersäure einer Konzentration im Bereich von 40 bis 70 Ma.-%, insbesondere von etwa 67 Ma.-%, durch Gegenstrom-Extraktivrektifikation konzentriert. Bei der Extraktivrektifikation wird zur Bindung der Wasseranteile der etwa azeotropen Salpetersäure in der Regel eine konzentrierte Schwefelsäure einer Konzentration im Bereich von 86 Ma.-% bis 90 Ma.-% eingesetzt, die während der Extraktivrektifikation durch Aufnahme des Wassers aus der aufzukonzentrierenden Salpetersäure auf etwa 70 Ma.-% verdünnt wird. Um diese verdünnte Schwefelsäure in die Extraktivrektifikation zurückführen zu können, muss sie rückkonzentriert werden. Diese Rückkonzentrierung erfolgt üblicherweise in einem besonderen Teil der gesamten NACSAC-Anlage zur Salpetersäurekonzentrierung. Die in dieser Anlage als Extraktionsmittel verwendete, im Kreislauf geführte Schwefelsäure wird auch als "Kreislaufsäure" oder "Kreissäure" bezeichnet und ist nicht Teil der Massenbilanz des eigentlichen Nitrierverfahrens. Ergänzende Ausführungen zur Hochkonzentrierung von Salpetersäure durch Extraktivrektifikation mit dem Extraktionsmittel Schwefelsäure und zur Rückkonzentrierung des Extraktionsmittels finden sich in den Patenten EP 1 284 928 B1 bzw. US 6,969,446 B1 der Anmelderin.

Es ist Aufgabe der vorliegenden Erfindung, ein Verfahren und eine Anlage zur Herstellung von Nitroaromaten so zu verbessern, dass der Einsatz von Direktdampf vermindert wird, die Menge der aus dem Verfahren abgeleiteten flüssigen Abfallströme vermindert wird, das Gesamtverfahren vereinfacht wird und damit insgesamt ökonomischer und umweltfreundlicher wird.

Diese Aufgabe wird durch ein Verfahren gemäß Patentanspruch 1 gelöst, dessen verschiedene bevorzugte Weiterbildungen und Ausgestaltungen den Unteransprüchen 2 bis 15 zu entnehmen sind, sowie durch eine Anlage zur Durchführung eines solchen Verfahrens, die neben üblichen Vorrichtungen und Anlagenteilen zur Beheizung, zum Wärmeaustausch und zur Erzeugung des gewünschten Unterdrucks die in Anspruch 16 genannten Anlagenteile umfasst.

Bei Untersuchung des gesamten komplexen Prozesses der Herstellung von Nitroaromaten wie z.B. DNT wurde von den Erfindern gefunden, daß alle oben genannten Probleme der Verfahren des Standes der Technik vermieden werden können, wenn man die verunreinigte Nitrierabsäure aus der DNT-Anlage in zwei vorgeschalteten, mit Eigendampf beheizten Strippkolonnen gemeinsam mit mindestens einer, vorzugsweise zwei weiteren wässrigen Absäuren aufarbeitet, die bei einem Verfahren zur Nitrierung mit hochkonzentrierter Salpetersäure meistens auch aufkonzentriert werden müssen, die in der Vergangenheit jedoch jede für sich separat konzentriert wurden.

Bei den weiteren Absäuren handelt es sich insbesondere um die bereits genannte Waschsäure aus der DNT-Wäsche und um die verwässerte Kreislaufschwefelsäure (Kreissäure) aus der Stufe der Hochkonzentrierung azeotroper HNO₃ auf 98 - 99%ige Salpetersäure.

Nachfolgend wird die Erfindung unter Bezugnahme auf zwei Figuren und ein Ausführungsbeispiel mit Massenbilanzen noch näher erläutert, wobei weder die Figuren noch das Ausführungsbeispiel im Sinne einer einschränkenden Auslegung der Erfindung zu verstehen sind.

Es zeigen:

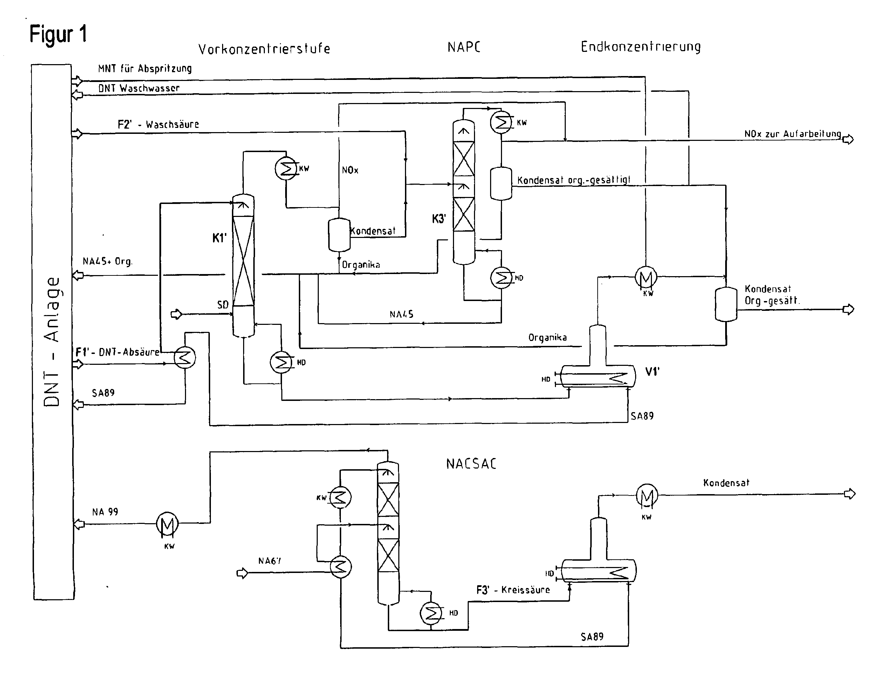

- Figur 1: ein Verfahrensfließbild des gebräuchlichsten Standes der Technik mit einer nur schematisch dargestellten an sich bekannten Anlage zur Nitrierung von Toluol und (i) dem Anlagenzweig zur Aufarbeitung der Nitrierabsäure und der DNT-Waschsäure, zur Rückführung der bei der Aufarbeitung wiedergewonnenen Produkte in das Nitrierverfahren und zur Ausschleusung der Abfallproduktströme aus dem Verfahren, sowie (ii) dem separaten Anlagenzweig zur Durchführung des NACSAC-Verfahrens zur Herstellung einer hochkonzentrierten Salpetersäure; und

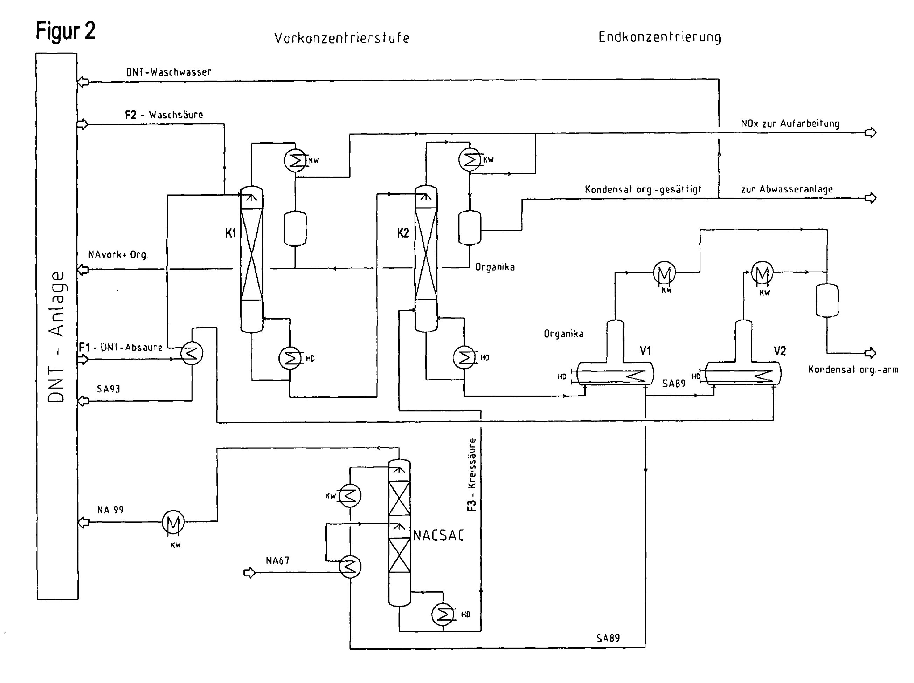

- Figur 2: ein Verfahrensfließbild einer schematisch dargestellten Anlage zur Nitrierung von Toluol gemäß einer bevorzugten Ausführungsform eines erfindungsgemäßen Verfahrens mit (i) den Anlagenzweigen zur gemeinsamen Aufarbeitung der Nitrierabsäure und der DNT-Waschsäure sowie der verdünnten Schwefelsäure aus dem Anlagenzweig zur Durchführung des NACSACVerfahrens, zur Rückführung der bei der Aufarbeitung wiedergewonnenen Produkte in das Nitrierverfahren und zur Ausschleusung der Abfallproduktströme aus dem Verfahren.

In den Figuren und der nachfolgenden Beschreibung stehen die verschiedenen verwendeten Abkürzungen für die folgenden Begriffe:

K für Kolonne, V für Verdampfer zur Höherkonzentration bei vermindertem Druck, F für Feedströme, NA für Salpetersäure (Nitric Acid), SA für Schwefelsäure (Sulfuric Acid), HD für Heißdampf, SD für Strippdampf und KW für Kühl-, Kalt- oder Warmwasser für den Wärmeaustausch mit den jeweiligen Prozessströmen. Zahlen hinter K für Kolonne kennzeichnen in der nachfolgenden Figurenbeschreibung näher erläuterte einzelne Kolonnen; Zahlen hinter F kennzeichnen die verschiedenen in das erfindungsgemäße Aufarbeitungsverfahren eingespeisten Feedströme im Sinne der nachfolgenden Figurenbeschreibung; und Zahlen hinter den Abkürzungen NA bzw. SA für Salpeter- bzw. Schwefelsäure kennzeichnen die typischen Konzentrationen dieser Säuren im jeweiligen Prozesstrom in Masse-% (d.h. SA89 steht z.B. für eine Schwefelsäure einer Säurekonzentration von 89 Ma.-%, NA67 steht für eine etwa azeotrope Salpetersäure einer Säurekonzentration von 67 Ma.-%).

Bei Druckangaben bedeuten in Klammern hinter Druckangaben in bar gesetzte Angaben (a) bzw. (ü) Atmosphären- bzw. Überdruck.

In den Figuren 1 und 2 sind einander entsprechende Feed- und Produktströme mit entsprechenden Abkürzungen gekennzeichnet, wobei zur Vermeidung von Verwechslungen die Feedströme im Verfahren gemäß dem Stand der Technik (Figur 1) als F1*'*, F2*'* und F3' bezeichnet werden, die Kolonnen gemäß dem Stand der Technik (Figur 1) als K1*'* und K3*'* und ein Verdampfer als Verdampfer V1*'*.

Figur 1 zeigt ein Verfahrensfließbild des gebräuchlichsten Standes der Technik mit einer nur schematisch dargestellten an sich bekannten Anlage zur Nitrierung von Toluol, in der Toulol nach irgendeinem an sich bekannten Verfahren unter Bildung von DNT nitriert wird. Die Darstellung passt insbesondere auf ein zweistufiges Nitrierverfahren mit einer ersten Stufe der Nitrierung von Toluol zu MNT und einer nachfolgende Nitrierung des MNT zu DNT in einer zweiten Stufe. Diese Darstellung ist jedoch nicht einschränkend zu verstehen, und das erfindungsgemäße Verfahren kann bei entsprechender, routinemäßiger Anpassung der Verfahrensströme auch in Verbindung mit einem anderen Nitrierverfahren zur Anwendung kommen.

Das Verfahren gemäß dem Stand der Technik gemäß Figur 1 weist eine Strippkolonne K1' auf, auf deren Kopf als Feedstrom F1 die aufzuarbeitende Nitrierabsäure (F1'-DNT-Absäure) aufgegeben wird. In den unteren Teil der Strippkolonne K1' wird als Direktdampf Strippdampf (SD) eingespeist. Den als Kopfprodukt erhaltenen Brüden wird nach der Abtrennung von Nitroorganika Waschsäure (Mischsäure) aus der DNT-Wäsche zugegeben, und die vereinigten Flüssigphasen werden in eine NAPC-Kolonne K3' zur Herstellung einer vorkonzentrierten Salpetersäure (etwa 45 Ma.%) eingeführt, die gemeinsam mit den abgetrennen Nitroorganika in das Nitrierverfahren rückgeführt wird.

Der Anlagenzweig des NACSAC-Verfahrens zur Herstellung einer hochkonzentrierten Salpetersäure weist gemäß Figur 1 keine Querverbindungen zum o.g. Anlagenzweig zur Aufarbeitung der Nitrierabsäure, dafür aber eine eigene Kondensatableitung auf.

Kernstück der erfinderischen Lösung sind nach Figur 2 die beiden Strippkolonnen K1 und K2. Die Strippkolonne K1 arbeitet vorzugsweise unter Normaldruckbedingungen mit Sumpfbeheizung. Am Kopf der Strippkolonne K1 wird nicht nur der auf über 100°C vorgewärmte Feed F1 der Nitrierabsäure aufgegeben, sondern - damit vermischt oder in einem Bereich in der Nähe des Punkts der Einspeisung der Nitrierabsäure eingespeist - zusätzlich als Feedstrom F2 die aus der DNT-Wäsche erhaltene aufzukonzentrierende DNT-Waschsäure, die ein verdünntes Gemisch von Salpetersäure, Schwefelsäure und Nitroorganika darstellt. Da die Waschsäure F2 einen beträchtlichen Salpetersäuregehalt von bis zu 20 Ma.-% aufweisen kann und relativ kalt aufgegeben wird, gelingt es in K1 ohne Kolonnenrücklauf, gesteuert durch einen definierten Wärmeeintrag über den Sumpfheizer der Strippkolonne K1, nach der Kondensation der Kopfbrüden als Kopfprodukt von K1 eine bis zu ca. 50%ige Salpetersäure zu erhalten, die ohne weitere Aufarbeitung direkt für die Nitrierung genutzt und abgeleitet werden kann. Dieses Kopfprodukt enthält auch einen beträchtlichen Anteil der Nitroorganika wie MNT und DNT und nur Spuren an Schwefelsäure.

Um einen Feststoffausfall des DNT zu verhindern, zu dem es bei einer Abkühlung des Kopfprodukts von K1 unter den Stockpunkt von DNT kommen könnte und der die Rückführung des kondensierten Produkts in das Nitrierverfahren behindern könnte, wird der Kondensator für die als Kopfprodukt aus K1 erhaltenen Brüden zweckmäßig mit Warmwasser von ca. 55°C im Vorlauf betrieben.

Das erhaltene Sumpfprodukt der K1, das durch die Zumischung des Waschsäure-Feedstroms F2 sogar einen geringeren Schwefelsäuregehalt als die Nitrierabsäure im Feedstrom F1 aufweist, weist dabei nahezu keine Salpetersäure mehr auf. Auch auch der Gehalt an Nitrosylschwefelsäure (NSS, HNO₂) ist durch die Strippung der *"*dünneren Lösung*"* mit einem höheren Wassergehalt bis unter den gewünschten Wert abgebaut, wobei die dabei entstandenen nitrosen Gase (NOₓ) im K1 zugeordneten Kondensator für das Kopfprodukt in rückgewonnenes HNO₃ und entweichendes NO aufgetrennt werden. Das NO kann in bekannter Weise in einer NOx-Absorptionsanlage unter Druck mit Wasser wiederum zu Salpetersäure umgesetzt werden.

Durch diese erfindungsgemäße Fahrweise in Strippkolonne K1 erübrigt sich die nachgeschaltete energieaufwendige NAPC-Stufe (K3 in Figur 1), die mit Kolonnenrücklauf arbeiten muss.

Die aus dem Sumpf der Strippkolonne K1 ablaufende vorgereinigte Säure enthält jedoch einen noch zu hohen Gehalt an DNT, der in den folgenden Konzentrierstufen nach seiner Kondensation zu Problemen führen würde. Deshalb dient eine zweite Strippkolonne K2 dazu, diesen DNT-Anteil ebenfalls durch Strippung mit Eigendampf nahezu gänzlich zu eliminieren (<20 ppm), und zwar ohne zusätzlichen fremden Strippdampf, wozu man in den Sumpf dieser zweiten Strippkolonne K2 die durch Wasseraufnahme verdünnte Schwefelsäure aus dem NACSAC-Verfahren zur Salpetersäure-Hochkonzentration einführt. Dadurch wird garantiert, dass im Brüdenkondensat der folgenden Hochkonzentrierstuf(en) unter Verwendung liegender Verdampfer bei einem Unterdruck von 100 mbar absolut (mbar a) nur noch ein 200 ppm nicht überschreitender Anteil an DNT vorhanden ist, der in jedem Falle gelöst bleibt.

Indem man erfindungsgemäß die DNT-haltige Ablaufsäure aus der Strippkolonne K1 am Kopf der zweiten Strippkolonne K2 aufgibt und die sogenannte verwässerte Kreislaufsäure F3 aus dem Verfahren der Hochkonzentrierung der Salpetersäure (NACSAC) mit ebenfalls ca. 70 Ma.-% Schwefelsäure und Spuren an DNT in den unteren Teil der Strippkolonne K2 oder direkt in den Sumpfheizer der Kolonne K2 einbringt, erhält man bei der erforderlichen Stufenzahl der Kolonne K2 und einer definierten Endkonzentration der Ablauf-Schwefelsäure dieser Stripperstufe ausreichend Wasserdampf durch Eigenverdampfung, um in dieser Stufe nahezu das gesamte restliche DNT aus der Nitrierabsäure eliminieren zu können. Das gelingt besonders gut, wenn man die zweite Strippstufe in Kolonne K2 bei einem mäßigen Unterdruck, vorzugsweise bei 300 - 500 mbar (a) betreibt, da unter solchen Bedingungen einerseits der Konzentrierungsgrad höher als bei Normaldruck ist und außerdem die Tau- bzw. Siedetemperatur des wässrigen Brüdenkondensats noch oberhalb der Stocktemperatur von DNT liegt. Somit sind feste Ausfällungen im heterogenen Kopfprodukt von K2 auf dieser Stufe nach der Kondensation nicht zu befürchten, insbesondere, wenn indirekt mit gekühltem Warmwasserkreislauf kondensiert wird.

Aufgrund der erfindungsgemäßen, synergetisch wirkenden gemeinsamen Aufarbeitung verschiedener, bisher getrennt verarbeiteter Feedsäuren, nämlich der Nitrierabsäure aus F1, der Waschsäure aus der DNT-Wäsche aus F2, und der Kreislaufsäure aus F3 aus dem NACSAC-Verfahren, erübrigt sich im NACSAC-Prozess die dort sonst erforderliche Stufe zur Rückkonzentrierung der als Extraktionsmittel dienenden Schwefelsäure.

Das gewonnene wässrige Brüdenkondensat aus der Strippkolonne K2 weist nach Abscheidung der DNT-Phase nur noch gelöstes DNT und unbedeutende Mengen an Salpetersäure und Schwefelsäure auf. Dadurch ist es möglich, wenigstens einen Teil dieses Kondensat wieder als Waschwasser für die DNT-Wäsche zu benutzen.

Das Sumpfprodukt aus K2, typischerweise eine z.B. etwa 78 - 82% ige Schwefelsäure, wird anschließend in nachgeschalteten herkömmlichen bekannten Verdampfern V, bevorzugt in liegenden Kettle-Verdampfern, von denen in Figur 2 zwei Verdampfer V1 und V2 gezeigt sind, im Unterdruckbetrieb bei 100 mbar(a) oder tiefer weiter konzentriert.

Da ein Teil der aufkonzentrierten Gesamt-Schwefelsäure wieder als Kreislaufsäure für die Extraktivdestilation in der NACSAC-Kolonne benötigt wird und daher dem Prozess entnommen werden muss, wird erfindungsgemäß eine dieser Unterdruckverdampferstufen so konzipiert, dass die Ablaufsäure daraus genau die Schwefelsäurekonzentration (SA89) aufweist, die für den NACSAC-Prozess benötigt wird, so dass diese Teilmenge auf direktem Wege zur NACSAC-Kolonne zurückgeführt werden kann.

Da oft für die Nitrierung eine Schwefelsäure gefordert wird, die eine noch höhere Schwefelsäurekonzentration als die als Extraktionsmittel im NACSAC-Verfahren eingesetzte Schwefelsäure aufweist, kann in einem solchen Fall in einer weiteren Unterdruckverdampferstufe V2 bei noch weiter abgesenktem Unterdruck der Reststrom der aufkonzentrierten Schwefelsäure separat für die Nitrierung noch weiter konzentriert werden.

Das Brüdenkondensat aus den den beiden erfindungsgemäßen Strippkolonnen K1 in Kombination mit K2 nachgeschalteten Unterdruckverdampferstufen weist aufgrund der weitestgehenden Eliminierung der Organika in K1 und K2 gegenüber den Kondensaten des Standes der Technik bzw. dem Kopfprodukt von K2 im erfindungsgemäßen Verfahren eine wesentlich verbesserte Reinheit auf und muss in den meisten Fällen nicht mehr kostenintensiv nachbehandelt werden. In der Regel kann es direkt einer biologischen Abwasseranlage zugeführt werden und muss nicht den Weg über Thermolyse oder Extraktion gehen.

Bei der oben geschilderten bevorzugten Ausführungsform des erfindungsgemäßen Verfahrens gemäß Figur 2 wird neben dem Feedstrom F1 mit der Nitrierabsäure und dem Feedstrom F3 mit der sogenannten Kreislaufsäure aus der Hochkonzentrierrung von Salpetersäure durch Extraktivrektifikation als Feedstrom F2 die Waschsäure aus der DNT-Wäsche verwendet. Das erfindungsgemäße Verfahren ist jedoch auch durchführbar, wenn kein Waschsäure-Feedstrom F2 zur Verfügung steht, z.B. weil das Nitrierverfahren kein Verfahren zur Herstellung von DNT ist oder bereits eine Anlage zur getrennten Aufarbeitung der Waschsäure vorhanden ist, die unter vorteilhaften Bedingungen weiter betrieben werden kann. In einem solchen Falle würde in der Strippkolonne K1 derjenige Salpetersäure- und Wasseranteil fehlen, der normalerweise, bei einer Ausführungsform des Verfahrens gemäß Figur 2, mit dem Feedstrom F2 eingebracht wird. Indem man der Strippkolonne K1 statt der Waschsäure z.B. die verdünnte Salpetersäure zuführt, die auf der Stufe der Absorption der NO_{X}-Abgase gewonnen wird, läßt sich das Fehlen des Feedstrom F2 weitgehend kompensieren, wenn man die Verfahrensparameter ggf. entsprechend anpasst. Für eine solche Verfahrensweise sollte die Nitrierabsäure einen Gehalt an HNO₃ und Nitrosylschwefelsäure (als HNO₂) von wenigstens jeweils 1 Ma.-% aufweisen, und der Feed darf nicht so stark vorgewärmt werden wie im Falle der Mitverwendung der DNT-Waschsäure aus F2, damit am Kopf der Strippkolonne K1 eine Salpetersäure von nahezu 50 Ma.-% erhalten werden kann.

Selbstverständlich ist es gewünschtenfalls auch möglich, die Waschsäure aus dem Nitrierverfahren ganz oder teilweise in Kombination mit einer anderen verdünnten Salpetersäure z.B. aus der NO_{X}-Absorption in die Strippkolonne K1 einzuspeisen, wenn das im Einzelfall Vorteile bringt, z.B. im Hinblick auf die Qualität und Konzentration der als Kopfprodukt der Strippkolonne K1 gewonnenen, direkt in das Nitrierverfahren zurück geführten Fraktion aus Salpetersäure und Nitroorganika.

### Ausführungsbeispiel

Das erfindungsgemäße Verfahren wird nunmehr anhand eines nicht einschränkend zu interpretierenden Ausführungsbeispiels näher erläutert, wobei auf Figur 2 Bezug genommen wird und die verschiedenen Verfahrensströme mit Abkürzungen gekennzeichnet werden, die weiter oben im Anschluss an die allgemeine Figurenbeschreibung erläutert wurden.

Als Heizdampf für alle Verdampfer wird Dampf mit einem Druck von 17 bar(ü) eingesetzt. Die Heizerflächen sind in Tantal ausgeführt.

Die gemäß dem erfindungsgemäßen Verfahren gemeinsam aufgearbeiteten Feedströme F1 bis F3 gemäß Figur 2 werden wie folgt spezifiziert:
F1: Nitrierabsäure aus der DNT-Anlage (vorgewärmt am Kopf der K1 aufgegeben)

| | | |
|---|---|---|
| Durchsatz: | ca. 33500 kg/h | |
| Temperatur: | ca. 50°C | |
| Zusammensetzung: | Schwefelsäure: | ca. 70,5 Ma.-% |
| | Salpetersäure: | ca. 1,0 Ma.-% |
| | HNO₂: | ca. 1,3 Ma.-% (3,5 Ma.-% NSS) |
| | DNT/MNT | ca. 0,4 Ma.-% (vorw. DNT) |
| | Wasser | Rest |

F2: Waschsäure aus DNT-Wäsche (am Kopf der K1 aufgegeben)

| | | |
|---|---|---|
| Durchsatz: | ca. 3200 kg/h | |
| Temperatur: | ca. 60°C | |
| Zusammensetzung: | Schwefelsäure: | ca. 9,0 Ma.-% |
| | Salpetersäure: | ca. 18,0 Ma.-% |
| | HNO₂: | ca. 0,5 Ma.-% |
| | DNT/MNT | ca. 2,0 Ma.-% (vorw. DNT) |
| | Wasser | Rest |

F3: Kreislaufsäure aus der NACSAC-Kolonne (im Sumpf der K2-Kolonne eingebracht)

| | | |
|---|---|---|
| Durchsatz: | ca. 37750 kg/h | |
| Temperatur: | ca. 166°C | |
| Zusammensetzung: | Schwefelsäure: | ca. 71,0 Ma.-% |
| | Salpetersäure: | ca. 0,01 Ma.-% |
| | HNO₂ : | Spuren |
| | DNT/MNT | Spuren |
| | Wasser | Rest |

Die Kolonne K1, die zur Realisierung der erforderlichen Trennstufenzahl mit einer Glaspackung bestückt ist, arbeitet bei Normaldruck. Als Heizer für K1 wird ein liegender Verdampfer gemäß dem Stand der Technik eingesetzt.

Am Kopf der Kolonne K1 werden als Produkt der ersten Aufarbeitung nach Kondensation ca. 2260 kg/h einer ca. 48 %igen Salpetersäure aufgefangen, die auf direktem Weg in das Nitrierverfahren zur DNT-Herstellung zurückgeführt werden. Dieses Kopfprodukt enthält auch nicht gelöstes flüssiges DNT.

Das Sumpfprodukt der Strippkolonne K1 ist eine ca. 70 Ma.-%ige Schwefelsäure und wird am Kopf der mit einem liegendem Verdampfer beheizten und ebenfalls mit einer Glaspackung bestückten Strippkolonne K2 aufgegeben, die bei einem Systemdruck von ca. 400 mbar (a) betrieben wird. Im Verdampfereintritt der Strippstufe wird die Kreislaufsäure (F3) aus der NACSAC-Stufe eingebracht. Bei einer definierten Beheizung, die über die Verdampferaustrittstemperatur der Ablaufsäure geregelt wird, werden ca. 7375 kg/h Brüden über Kopf der K2-Kolonne abgezogen und nachfolgend kondensiert. Im erhaltenen Brüdenkondensat aus K2 befinden sich die restlichen Nitroorganika und Reste der nicht bereits in K1 aus der Schwefelsäure eliminierten Salpetersäure sowie ca. 0,2 Ma.-% Schwefelsäure (Verluste).

Nach einer Abscheidung des DNT aus der DNT-haltigen Phase des Brüdenkondensats aus K2, das zusammen mit dem Salpetersäure-Kopfprodukt aus K1 in die DNT-Anlage zurückgeführt wird, wird von der wässrigen Phase des Brüdenkondensats der K2, die mit Organika gesättigt ist (ca. 1200 Ma.-ppm), eine Menge von ca. 2700 kg/h abgezweigt, die als Waschwasser für das DNT-Produkt in der DNT-Anlage dient. Der restliche größere Teil des wässrigen Kondensats wird einer Abwasseraufbereitungsanlage zugeführt, in der die restlichen Organika entfernt werden, beispielsweise einer Thermolyse.

Gesammelte gasförmige NOx-Emissionen aus K1 und K2 werden abgesaugt und einer NOx-Vernichtungsanlage zugeführt, beispielsweise einer NOx-Absorptionsanlage, in der unter erhöhtem Druck von etwa 6 bar(a) mit Wasser eine etwa 50%ige Salpetersäure erzeugt wird. Diese kann ebenfalls direkt in der ersten Stufe eines zweistufigen Nitrierverfahrens wiederverwendet werden. Sie kann jedoch, gemäß einer nachfolgend erwähnten Verfahrensvariante, ggf. auch mit der Nitrierabsäure in die Strippkolonne K1 eingespeist werden.

Die den Sumpfheizer der Strippkolonne K2 verlassende, etwa 79 %ige Schwefelsäure mit nur ca. 20 Gew.-ppm Restgehalt an Nitroorganika wird der nächsten Verdampferstufe zur weiteren Schwefelsäurekonzentrierung, wieder mit einem liegenden Verdampfer, zugeführt, die bei einem Unterdruck von etwa 100 mbar(a) betrieben wird.

Die Brüden aus dieser Stufe werden problemlos im angeschlossenen Kondensator mit Kühlwasser von 30°C niedergeschlagen, ohne dass es zu DNT-Ausfällungen kommt. Man erhält dabei eine Menge von ca. 7700 kg/h eines Kondensats, welches zwar bis zu 0,8 Ma.-% Schwefelsäuregehalt (Verluste), aber nur ca. 160 Gew.-ppm Organika aufweist. Dieser Strom kann ohne weitere Aufarbeitung in eine biologische Abwasseranlage eingeleitet werden, was von großem Vorteil ist.

Vom Verdampfer dieser vorgenannten Unterdruckstufe laufen ca. 57000 kg/h konzentrierte Schwefelsäure mit einer Konzentration von ca. 89 Ma.-% ab, von denen ungekühlt ca. 30 t/h als Schwefelsäure für die Extraktivdestillation in der NACSAC-Anlage abgezweigt werden, wo mit ihrer Hilfe die dort eingesetzte azeotrope Salpetersäure von ca. 65-67 Ma.-% durch Wasserentzug auf 99 Ma.-% HNO₃ (NA99) konzentriert wird, die in der zweiten Stufe der DNT-Herstellung benötigt wird.

Der restliche, nicht in die NACSAC-Anlage als Extraktionsmittel abgezweigte Teil der 89%igen Schwefelsäure aus der Unterdruckverdampferstufe wird gegebenenfalls in einem weiteren liegenden Verdampfer V2 weiter aufkonzentriert und/oder direkt im Wärmeaustausch mit dem Feed der Nitrierabsäure (F1) und nachfolgend mit Kühlwasser auf 40°C gekühlt und für die DNT-Nitrierung bereitgestellt.

## Patentansprüche

1. Verfahren zur Rückgewinnung von verdünnten und verunreinigten Abfallschwefelsäuren aus Nitrierprozessen,
wobei man die aus dem Nitrierverfahren abgezogene Nitrierabsäure, die neben bis zu 80 Ma.-% Schwefelsäure und Wasser als weitere Bestandteile Salpetersäure (HNO₃), Nitrosylschwefelsäure (als HNO₂), und Nitroorganika, insbesondere DNT und MNT, enthält, in einer Strippkolonne einer wenigstens teilweisen Reinigung von den genannten weiteren Bestandteilen unterzieht und sie dann einer weiteren Aufkonzentrierung in einem oder mehreren nachgeordneten, bei Unterdruck arbeitenden Verdampfern zuführt, und
wobei dem Nitrierverfahren außerdem die Herstellung einer im Nitrierverfahren benötigten hochkonzentrierten Salpetersäure aus einer verdünnteren Salpetersäure durch Extraktivrektifikation unter Verwendung von konzentrierter Schwefelsäure als Extraktionsmittel zugeordnet ist, wobei die als Extraktionsmittel verwendete Schwefelsäure bei der Extraktivrektifikation verdünnt wird und zur Wiederverwendung rückkonzentriert wird,
**dadurch gekennzeichnet, dass** man
die Nitrierabsäure (F1) auf den Kopf einer ersten, indirekt beheizten Strippkolonne (K1) aufgibt und in ein Salpetersäure und Nitroorganika enthaltendes Kopfprodukt und eine vorgereinigte Schwefelsäure im Sumpfprodukt auftrennt und
die aus dem Sumpf der ersten Strippkolonne (K1) abgezogene vorgereinigte Schwefelsäure auf den Kopf einer zweiten, in Reihe geschalteten weiteren indirekt beheizten Strippkolonne (K2) aufgibt, in deren Sumpfbereich oder Verdampfer man eine verdünnte Schwefelsäure (F3) aus der Anlage zur Hochkonzentrierung von Salpetersäure durch Extraktivrektifikation einspeist, so dass man in der zweiten Strippkolonne (K2) die vorgereinigte Schwefelsäure aus der Strippkolonne (K1) weiter reinigt und gemeinsam mit der verdünnten Schwefelsäure aus der Extraktivrektifikation von Salpetersäure vorkonzentriert, wonach man
die aus dem Verdampfer der zweiten Strippkolonne (K2) ablaufende vorkonzentrierte Schwefelsäure nachfolgend in einer oder mehreren an sich bekannten Verdampferstufe(n) bei Unterdruck weiter aufkonzentriert.

2. Verfahren nach Anspruch 1, **dadurch gekennzeichnet, dass** man die Nitrierabsäure (F1) der ersten Strippkolonne (K1) im wesentlichen gemeinsam mit dem Strom (F2) einer weiteren Abfallsäure aus dem Nitrierverfahren in Form einer Waschsäure aus der DNT-Wäsche auf den Kopfbereich der ersten Strippkolonne aufgibt.

3. Verfahren nach Anspruch 1 oder 2, **dadurch gekennzeichnet, dass** die zu konzentrierende Nitrierabsäure (F1) einen Schwefelsäuregehalt zwischen 68 Ma.-% und 80 Ma.-% aufweist und dass der Gehalt an Salpetersäure und der Gehalt an Nitrosylschwefelsäure, ausgedrückt als HNO₂, in der Nitrierabsäure wenigstens jeweils 1 Ma.-% beträgt, und
dass die verdünnte Schwefelsäure aus der Extraktivrektifikation von Salpetersäure einen Gehalt von mindestens 65 Ma.-% Schwefelsäure aufweist.

4. Verfahren nach Anspruch 2, **dadurch gekennzeichnet, dass** die Waschsäure von 10-20 Ma.-% HNO₃, von 5-12 Ma.-% H₂SO₄ und einen Gesamtgehalt an Mischsäure von 18 bis 35 Ma.-% sowie gelöste Nitroorganika enthält.

5. Verfahren nach einem der Ansprüche 1 bis 4, **dadurch gekennzeichnet, dass** man für die indirekte Beheizung der Verdampfer der ersten und zweiten Strippkolonnen (K1 und K2) Wasserdampf von 6 bar(a) bis 40 bar(a), vorzugsweise Heizsattdampf von 15 - 17 bar(a), oder Thermoöl einsetzt.

6. Verfahren nach einem der Ansprüche 1 bis 5, **dadurch gekennzeichnet, dass** man als Verdampfer für die erste und/oder zweite Strippkolonne (K1; K2) liegende Verdampfer mit Heizerrohren aus Tantal einsetzt.

7. Verfahren nach Anspruch 3, **dadurch gekennzeichnet, dass** die verdünnte Schwefeläure aus der Extraktivrektifikation (F3) nur maximal 0,5 Ma.-% Salpetersäure und nur maximal 40 Gew.-ppm Nitroorganika enthält.

8. Verfahren nach einem der Anspruch 1 bis 7, **dadurch gekennzeichnet, dass** die erste Strippkolonne (K1) indirekt so beheizt wird, dass die ablaufende Schwefelsäure nur noch einen Restgehalt an Salpetersäure von kleiner als 0,1 Ma.-% und von kleiner als 0,2 Ma.-% HNO₂ aufweist.

9. Verfahren nach einem der Ansprüche 1 bis 8, **dadurch gekennzeichnet, dass** die erste Strippkolonne (K1) bei einem Systemdruck von 500 mbar(a) bis 2 bar(a), vorzugsweise bei Normaldruck, betrieben wird.

10. Verfahren nach einem der Ansprüche 1 bis 9, **dadurch gekennzeichnet, dass** die zweite Strippkolonne (K2) bei einem Systemdruck von 200 mbar (a) bis 1 bar (a), vorzugsweise bei etwa 400 mbar(a), betrieben wird.

11. Verfahren nach einem der Ansprüche 1 bis 10, **dadurch gekennzeichnet, dass** das als Kopfprodukt gewonnene salpetersäurehaltige Brüdenkondensat aus ersten Strippkolonne (K1) gemeinsam mit der Organikaphase aus dem Brüdenkondensat der zweiten Strippkolonne (K2) ohne Phasenabscheidung direkt in die Nitrieranlage zurückgeführt wird.

12. Verfahren nach einem der Ansprüche 1 bis 11, **dadurch gekennzeichnet, dass** wenigstens ein Teil der wässrigen Phase des Brüdenkondensats aus zweiten Strippkolonne (K2) als Waschsäure für die DNT-Wäsche in eine Nitrieranlage zur DNT-Herstellung zurück geführt wird.

13. Verfahren nach einem der Ansprüche 1 bis 12, **dadurch gekennzeichnet, dass** nach einer weiteren Höherkonzentrierung der vorkonzentrierten Schwefelsäure aus der zweiten Strippkolonne (K2) in mindestens einem bei Unterdruck arbeitenden Verdampfer ein solcher Teil der höherkonzentrierten Schwefelsäure vom Gesamtstrom abgezweigt wird, der bezüglich des Schwefelsäureanteils dem Schwefelsäureanteil im Feedstrom aus der Extraktivrektifikation (F3) entspricht und der als Extraktivdestillationsmittel zurück in die Anlage zur Hochkonzentrierung von azeotroper Salpetersäure eingeleitet wird.

14. Verfahren nach einem der Ansprüche 1 bis 13, **dadurch gekennzeichnet, dass** man der ersten Strippkolonne (K1) gemeinsam mit dem Feedstrom der Nitrierabsäure (F1) einen beliebigen wässrigen Strom mit Gesamtsäure- und Salpetersäuregehalten, die denen in der Nitrierabsäure ähnlich sind, zuführt.

15. Verfahren nach Anspruch 14, **dadurch gekennzeichnet, dass** man als wässrigen Strom mit Gesamtsäure- und Salpetersäuregehalten, die denen in der Nitrierabsäure ähnlich sind, die bei der NOx-Absorption erzeugte reine unterazeotrope Salpetersäure mit ca. 20 Ma.-% - 50 Ma.-% HNO₃ zuführt.

16. Anlage zur Durchführung eines Verfahrens nach einem der Ansprüche 1 bis 15, **dadurch gekennzeichnet, dass**
- eine erste und eine zweite Strippkolonne (K1 ; K2), die jeweils mit Sumpfheizern und eigenen Kondensatoren versehen sind,
- Rohrleitungen zur Zufuhr von zwei Feedströmen (F1 und F2) aus einer Nitrieranlage zum Kopf der ersten Strippkolonne (K1) und
- Rohrleitungen zur Zuführung eines weiteren Feedstroms (F3) aus einer Anlage zur Hochkonzentrierung von Salpetersäure durch Extraktivdestillation zum Verdampfer- bzw. Sumpfteil der zweiten Strippkolonne (K2),
- Rohrleitungen zur Rückführung wenigstens eines Teils der Kondensate aus den Kondensatoren der ersten und zweiten Strippkolonnen (K1, K2) in die Nitrieranlage,
- mindestens einen durch eine Rohrleitung mit dem Sumpf der zweiten Strippkolonne verbundenen, bei Unterdruck arbeitenden Verdampfer, sowie
- Rohrleitungen zur Rückführung eines Teils der höherkonzentrierten Schwefelsäure aus dem mindestens einen Verdampfer als Extraktionsmittel in die Anlage zur Herstellung hochkonzentrierter Salpetersäure durch Extraktivrektifikation umfasst.

## Claims

1. Process for recovering dilute and contaminated waste sulphuric acids from nitration processes,
the nitration waste acid which is taken off from the nitration process and, in addition to up to 80% by mass of sulphuric acid and water, contains nitric acid (NHO₃), nitrosylsulphuric acid (as HNO₂) and nitro-organic compounds, in particular DNT and MNT, as further constituents being subjected in a stripping column to at least partial purification to remove said further constituents and then being fed for further concentration in one or more downstream evaporators operating under reduced pressure, and moreover
the preparation of a highly concentrated nitric acid required in the nitration process from a more dilute nitric acid by extractive rectification with the use of concentrated sulphuric acid as an extracting agent being coordinated with the nitration process, the sulphuric acid used as extracting agent being diluted in the extractive rectification and being reconcentrated for reuse,
**characterized in that**
the nitration waste acid (F1) is fed to the top of a first, indirectly heated stripping column (K1) and is separated into a top product containing nitric acid and nitro-organic compounds and a prepurified sulphuric acid in the bottom product and
the prepurified sulphuric acid taken off from the bottom of the first stripping column (K1) being fed to the top of a second further indirectly heated stripping column (K2) connected in series, into the bottom region or evaporator of which a dilute sulphuric acid (F3) from the plant for highly concentrating nitric acid by extractive rectification is fed so that, in the second stripping column (K2), the prepurified sulphuric acid from the stripping column (K1) is further purified and is preconcentrated together with the dilute sulphuric acid from the extractive rectification of nitric acid, after which
the preconcentrated sulphuric acid flowing out from the evaporator of the second stripping column (K2) is subsequently further concentrated in one or more evaporator stage(s) known per se under reduced pressure.

2. Process according to Claim 1, **characterized in that** the nitration waste acid (F1) is fed to the first stripping column (K1) substantially together with the stream (F2) of a further waste acid from the nitration process in the form of a wash acid from the DNT wash, to the top region of the first stripping column.

3. Process according to Claim 1 or 2, **characterized in that** the nitration waste acid (F1) to be concentrated has a sulphuric acid content between 68% by mass and 80% by mass, and **in that** the content of nitric acid and the content of nitrosylsulphuric acid, expressed as NHO₂, in the nitration waste acid is in each case at least 1% by mass, and
**in that** the dilute sulphuric acid from the extractive rectification of nitric acid has a content of at least 65% by mass of sulphuric acid.

4. Process according to Claim 2, **characterized in that** the wash acid contains 10 - 20% by mass of NHO₃, 5 - 12% by mass of H₂SO₄ and a total content of mixed acid of 18 - 35% by mass and dissolved nitro-organic compounds.

5. Process according to any of Claims 1 to 4, **characterized in that** steam at 6 bar (abs) to 40 bar (abs), preferably saturated heating steam at 15 - 17 bar (abs), or thermal oil is used for the indirect heating of the evaporators of the first and second stripping columns (K1 and K2).

6. Process according to any of Claims 1 to 5, **characterized in that** horizontal evaporators having tantalum heater tubes are used as evaporators for the first and/or second stripping column (K1; K2).

7. Process according to Claim 3, **characterized in that** the dilute sulphuric acid from the extractive rectification (F3) contains only at most 0.5% by mass of nitric acid and only at most 40ppm by weight of nitro-organic compounds.

8. Process according to any of Claims 1 to 7, **characterized in that** the first stripping column (K1) is indirectly heated so that the outflowing sulphuric acid only has a residual content of nitric acid of less than 0.1% by mass and of less than 0.2% by mass of NHO₂.

9. Process according to any of Claims 1 to 8, **characterized in that** the first stripping column (K1) is operated at a system pressure of 500 mbar (abs) to 2 bar (abs), preferably at atmospheric pressure.

10. Process according to any of Claims 1 to 9, **characterized in that** the second stripping column (K2) is operated at a system pressure of 200 mbar (abs) to 1 bar (abs), preferably at about 400 mbar (abs).

11. Process according to any of Claims 1 to 10, **characterized in that** the nitric acid-containing vapour condensate obtained as top product from the first stripping column (K1) is recycled together with the organic phase from the vapour condensate of the second stripping column (K2) directly into the nitration plant without phase separation.

12. Process according to any of Claims 1 to 11, **characterized in that** at least a part of the aqueous phase of the vapour condensate from the second stripping column (K2) is recycled as wash acid for the DNT wash into a nitration plant for DNT production.

13. Process according to any of Claims 1 to 12, **characterized in that**, after a further greater concentration of the preconcentrated sulphuric acid from the second stripping column (K2) in at least one evaporator operating under reduced pressure, a part of the more highly concentrated sulphuric acid which corresponds to the proportion of sulphuric acid in the feed stream from the extractive rectification (F3) with regard to the proportion of sulphuric acid is branched off from the total stream and is passed as extractive distillation agent back into the plant for highly concentrating azeotropic nitric acid.

14. Process according to any of Claims 1 to 13, **characterized in that** any desired aqueous stream having total acid and nitric acid contents which are similar to those in the nitration waste acid is fed to the first stripping column (K1) together with the feed stream of the nitration waste acid (F1) .

15. Process according to Claim 14, **characterized in that** the pure subazeotropic nitric acid produced in the NOx absorption and comprising about 20% by mass - 50% by mass of NHO₃ is fed in as an aqueous stream having total acid and nitric acid contents which are similar to those in the nitration waste acid.

16. Plant for carrying out a process according to any of Claims 1 to 15, **characterized by**
- a first and a second stripping column (K1; K2), which in each case are provided with bottom heaters and separate condensers,
- pipelines for feeding in two feed streams (F1 and F2) from a nitration plant to the top of the first stripping column (K1) and
- pipelines for feeding a further feed stream (F3) from a plant for highly concentrating nitric acid by extractive distillation to the evaporator part or bottom part of the second stripping column (K2),
- pipelines for recycling at least a part of the condensates from the condensers of the first and second stripping columns (K1, K2) into the nitration plant,
- at least one evaporator connected by a pipeline to the bottom of the second stripping column and operating under reduced pressure, and
- pipelines for recycling a part of the more highly concentrated sulphuric acid from the at least one evaporator as extracting agent into the plant for the production of highly concentrated nitric acid by extractive rectification.

## Revendications

1. Procédé de récupération d'acide sulfurique résiduaire dilué et souillé à partir d'un processus de nitration,
où l'on soumet l'acide résiduaire de nitration, soutiré du processus de nitration, qui contient outre jusqu'à 80% en masse d'acide sulfurique et de l'eau, comme autres constituants, l'acide nitrique (HNO₃), l'acide nitrosylsulfurique (en tant que HNO₂) et des composés nitro-organiques, en particulier le DNT et le MNT, à une purification au moins partielle des autres constituants cités dans une colonne de strippage, et on l'amène alors vers une autre concentration dans un ou plusieurs évaporateurs successifs, travaillant sous pression réduite, et
où le processus de nitration est rattaché en outre, à un dispositif de préparation d'acide nitrique très concentré, nécessaire pour le procédé de nitration, à partir d'un acide nitrique dilué, par rectification extractive en utilisant de l'acide sulfurique concentré comme agent d'extraction, où l'acide sulfurique utilisé comme agent d'extraction est dilué lors de la rectification extractive et reconcentré pour la réutilisation,
**caractérisé en ce que**
l'on charge l'acide résiduaire de nitration (F1) à la tête d'une première colonne de strippage (K1), chauffée indirectement et l'on sépare en un produit de tête contenant l'acide nitrique et les composés nitro-organiques et un acide sulfurique prépurifié dans le produit de fond, et
que l'on charge l'acide sulfurique prépurifié, soutiré du fond de la première colonne de strippage (K1), à la tête d'une deuxième colonne de strippage (K2), disposée en série, chauffée indirectement, dans la zone de fond ou évaporateur de laquelle on injecte un acide sulfurique dilué (F3) provenant de l'installation de concentration de l'acide nitrique par rectification extractive, de sorte que l'on purifie encore dans la deuxième colonne de strippage (K2), l'acide sulfurique prépurifié provenant de la première colonne de strippage (K1) et simultanément, on préconcentre l'acide sulfurique dilué provenant de la rectification extractive de l'acide nitrique,
après quoi l'on concentre encore l'acide sulfurique préconcentré, s'écoulant de l'évaporateur de la deuxième colonne de strippage (K2), ensuite, dans une ou plusieurs étapes d'évaporation connues en soi, sous pression réduite.

2. Procédé selon la revendication 1, **caractérisé en ce que** l'on charge l'acide résiduaire de nitration (F1) de la première colonne de strippage (K1), essentiellement simultanément au courant (F2) d'un autre acide résiduaire du procédé de nitration sous forme d'un acide de lavage provenant du lavage du DNT, dans la zone de tête de la première colonne de strippage.

3. Procédé selon la revendication 1 ou 2, **caractérisé en ce que** l'acide résiduaire de nitration (F1) à concentrer présente une teneur en acide sulfurique allant de 68% en masse à 80% en masse et **en ce que** la teneur en acide nitrique et la teneur en acide nitrosylsulfurique, exprimé comme HNO₂, dans l'acide résiduaire de nitration, s'élèvent chaque fois, à au moins 1% en masse, et
**en ce que** l'acide sulfurique dilué, provenant de la rectification extractive de l'acide nitrique, présente une teneur d'au moins 65% en masse d'acide sulfurique.

4. Procédé selon la revendication 2, **caractérisé en ce que** l'acide de lavage contient 10-20% en masse de HNO₃, 5-12% en masse de H₂SO₄ et une teneur totale en acide mixte allant de 18 à 35% en masse, ainsi que des composés nitro-organiques dissous.

5. Procédé selon l'une des revendications 1 à 4, **caractérisé en ce que** l'on met en oeuvre pour le chauffage indirect des première et deuxième colonnes de strippage (K1 et K2), de la vapeur d'eau allant de 6 bar (a) à 40 bar (a), de préférence de la vapeur saturée à 15-17 bar (a), ou de l'huile thermique.

6. Procédé selon l'une des revendications 1 à 5, **caractérisé en ce que** l'on met en oeuvre comme évaporateur pour la première et/ou la deuxième colonne de strippage (K1 ; K2), un évaporateur à plat avec tubes de chauffage en tantale.

7. Procédé selon la revendication 3, **caractérisé en ce que** l'acide sulfurique dilué provenant de la rectification extractive (F3) ne contient au maximum, que 0,5% en masse d'acide nitrique et au maximum, que 40 ppm en poids de composés nitro-organiques.

8. Procédé selon l'une des revendications 1 à 7, **caractérisé en ce que** la première colonne de strippage (K1) est chauffée indirectement de sorte que l'acide sulfurique s'écoulant ne présente plus qu'une teneur résiduelle en acide nitrique inférieure à 0,1% en masse et inférieure à 0,2% en masse en HNO₂.

9. Procédé selon l'une des revendications 1 à 8, **caractérisé en ce que** la première colonne de strippage (K1) fonctionne sous une pression du système allant de 500 mbar (a) à 2 bar (a), de préférence sous pression normale.

10. Procédé selon l'une des revendications 1 à 9, **caractérisé en ce que** la deuxième colonne de strippage (K2) fonctionne sous une pression du système allant de 200 mbar (a) à 1 bar (a), de préférence à environ 400 mbar (a).

11. Procédé selon l'une des revendications 1 à 10, **caractérisé en ce que** le condensat de fumées contenant l'acide nitrique, obtenu comme produit de tête de la première colonne de strippage (K1), est réalimenté avec la phase organique du condensat de fumées de la deuxième colonne de strippage (K2), sans séparation de phase, directement dans l'installation de nitration.

12. Procédé selon l'une des revendications 1 à 11, **caractérisé en ce qu'**au moins une partie de la phase aqueuse du condensat de fumées provenant de la deuxième colonne de strippage (K2) est dirigée comme acide de lavage pour le lavage du DNT, dans une installation de nitration pour la préparation du DNT.

13. Procédé selon l'une des revendications 1 à 12, **caractérisé en ce qu'**après une autre étape de concentration de l'acide sulfurique préconcentré provenant de la deuxième colonne de strippage (K2) dans au moins un évaporateur travaillant sous pression réduite, une partie de l'acide sulfurique très concentré est dérivée du courant global, qui correspond, par rapport à la quantité d'acide sulfurique, à la quantité d'acide sulfurique dans le courant d'alimentation de la rectification extractive (F3) et qui est envoyée comme agent de distillation extractive dans l'installation de concentration de l'acide nitrique azéotropique.

14. Procédé selon l'une des revendications 1 à 13, **caractérisé en ce que** l'on alimente la première colonne de strippage (K1), avec le courant d'alimentation de l'acide résiduaire de nitration (F1), un courant aqueux quelconque avec des teneurs en acide total et en acide nitrique, qui sont similaires à celles de l'acide résiduaire de nitration.

15. Procédé selon la revendication 14, **caractérisé en ce que** l'on alimente comme courant aqueux avec des teneurs en acide total et en acide nitrique, qui sont similaires à celles de l'acide résiduaire de nitration, l'acide nitrique sous-azéotropique pur, produit de l'absorption des NOₓ, avec environ 20% en masse-50% en masse de HNO₃.

16. Installation pour réaliser un procédé selon l'une des revendications 1 à 15, **caractérisé en ce qu'**elle comprend
- une première et une deuxième colonne de strippage (K1 ; K2), qui sont munies chacune, d'un chauffage et d'un condensateur propre,
- des conduites tubulaires pour l'alimentation de deux courants d'alimentation (F1 et F2) provenant d'une installation de nitration, vers la tête de la première colonne de strippage (K1), et
- des conduites tubulaires pour l'alimentation d'un autre courant d'alimentation (F3) provenant d'une installation de concentration de l'acide nitrique par distillation extractive, vers la partie d'évaporateur et respectivement, de fond de la deuxième colonne de strippage (K2),
- des conduites tubulaires pour le recyclage d'au moins une partie du condensat provenant des condensateurs des première et deuxième colonnes de strippage (K1, K2) dans l'installation de nitration,
- au moins un évaporateur travaillant sous pression réduite, relié par une conduite tubulaire au fond de la deuxième colonne de strippage,
- des conduites tubulaires pour le recyclage d'une partie de l'acide sulfurique très concentré provenant du au moins un évaporateur, comme agent d'extraction dans l'installation de préparation d'acide nitrique très concentré par rectification extractive.
